# EUROPEAN PATENT APPLICATION

(11) **EP 3 861 899 A1**
(43) Date of publication of application: **11.08.2021**
(21) Application number: 19869900.1
(22) Date of filing: 02.10.2019
(51) Int. Cl.: A47J 36/02, A47J 37/10

(54) **COOKING UTENSIL**

(30) Priority: 03.10.2018 JP 2018188644
(71) Applicant: Kyocera Corporation, Kyoto-shi, Kyoto 612-8501 (JP); DAIKIN INDUSTRIES, LTD., Osaka 530-8323 (JP)
(72) Inventor: NISHIHARA, Takanori, Kyoto-shi, Kyoto 612-8501 (JP); MOMOSE, Hiromichi, Osaka-Shi, Osaka 530-8323 (JP); SHIROMARU, Tomohiro, Osaka-Shi, Osaka 530-8323 (JP)
(74) Representative: Viering, Jentschura & Partner mbB Patent- und Rechtsanwälte
(86) International application number: PCT/JP2019/039000
(87) International publication number: WO 2020/071453

(57) **Abstract**

A cooking utensil 1 of the present disclosure includes a base material 2' having a cooking region 2a on one main surface side, and a coating film layer 4 applied to one main surface side of the base material 2', and the coating film layer 4 includes has a thermal conductivity exceeding 85 W/m·K, and includes a primer layer 41 disposed on the base material 2' side, a top coat layer 43 disposed on the outermost surface, and at least one intermediate layer 42 disposed between the primer layer 41 and the top coat layer 43. Each of the primer layer 41, the intermediate layer 42 and the top coat layer 43 includes ceramic particles 5.

## Description

### TECHNICAL FIELD

The present disclosure relates to a cooking utensil.

### BACKGROUND

Conventionally, as one kind of cooking utensil for heating and cooking food, for example, a frying pan as described in Patent Document 1 has been used. Such frying pans are widely used in homes or restaurants and are formed of metal materials. Further, it is known that the cooking utensil is coated with a coating film including a fluorine resin to reduce sticking or scorching of the food to the cooking utensil.

Further, for example, a frying pan as described in Patent Document 2 is also used. This frying pan includes a fluorine resin film including particles including silicon carbide as a main component, which is applied to a cooking region of a base material. Thereby, wear resistance can be improved.

### PRIOR ART DOCUMENTS

### PATENT DOCUMENTS

Patent Document 1: Japanese Unexamined Patent Publication No. 2012-200298
Patent Document 2: Japanese Unexamined Patent Publication No. 2016-136990

### SUMMARY

A cooking utensil of the present disclosure includes a base material having a cooking region on one main surface side, and a coating film layer applied to one main surface side of the base material, and the coating film layer has a thermal conductivity exceeding 85 W/m·K, and includes a primer layer disposed on the base material side, a top coat layer disposed on the outermost surface, and at least one intermediate layer disposed between the primer layer and the top coat layer. Each of the primer layer, the intermediate layer and the top coat layer includes ceramic particles.

### BRIEF DESCRIPTION OF THE DRAWINGS

FIG. 1(A) is a drawing explaining a cooking utensil related to one embodiment of the present disclosure, and FIG. 1(B) is a sectional view cut along line X-X' illustrated in FIG. 1(A).
FIG. 2 is an enlarged sectional view in a region Y illustrated in FIG. 1(B).

### EMBODIMENT

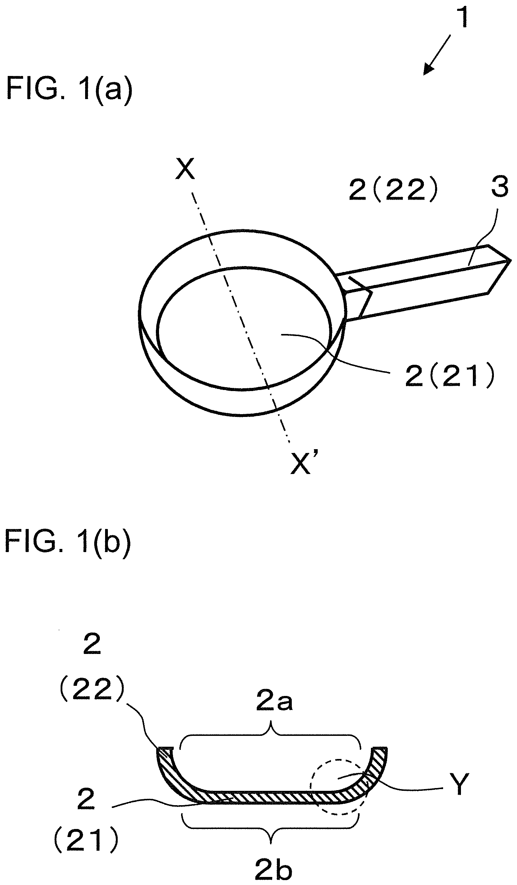

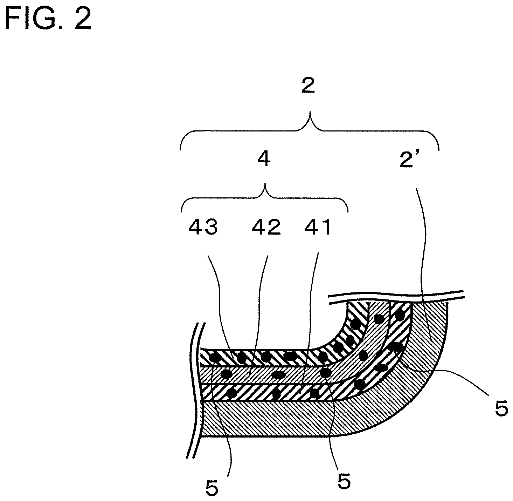

A cooking utensil related to the one embodiment of the present disclosure is described with reference to FIGs. 1(A), 1(B) and 2. These drawings are only schematic drawings, and dimensions, ratios or the like of the drawings are not always coincident with actual cooking utensils.

A cooking utensil related to the one embodiment is described by using a frying pan as an example as shown in FIG. 1(A). The cooking utensil (frying pan) 1 shown in FIG. 1(A) includes a main body part 2 and a handle part 3. The main body part 2 includes a bottom part 21 and a side surface part 22. Similar to a general frying pan, the main body part 2 includes the side surface part 22 formed relatively low and is formed in a shallow container shape. A height from the bottom part 21 to the top of the side surface part 22, that is, a depth of the main body part 2 formed in a container shape is set appropriately.

The shape of the main body part 2 is circular when viewed in a plan. A width of the main body part 2 is not limited and is set appropriately.

The main body part 2 includes the bottom part 21 and the side surface part 22, and the side surface part 22 is formed on a peripheral edge part of the bottom part 21 so as to surround the bottom part 21. The side surface part 22 may be formed perpendicular to the bottom part 21 or may be formed at an obtuse angle with respect to the bottom part 21 (that is, inclined outward from the lower part to the upper part of the side surface part). The bottom part 21 and the side surface part 22 may be molded integrally or may be molded and bonded individually.

The handle part 3 is a bar-shaped member and is attached to the side surface part 22. The handle part 3 is formed of wood, resin, metal or the like, and by having the handle part 3, the cooking utensil 1 can be easily operated during cooking. The handle part 3 is not a member that is always attached to the cooking utensil. The handle part 3 may be, for example, detachable.

As shown in FIG. 1(B), the main body part 2 is divided into a cooking region 2a and a heated region 2b. The cooking region 2a corresponds to a region surrounded by the side surface part 22, and the heated region 2b corresponds to an outer surface of the bottom part 21, that is, the region opposite to the cooking region 2a. In the cooking region 2a, the food is heated by heat applied to the heated region 2b. The heated region 2b is a region to which heat is applied by a gas stove, an electric stove, and an electromagnetic cooker (IH cooker). A metal material that improves heat conduction from the outside and reduces deformation of the cooking utensil 1 may be attached to the heated region 2b. The metal material is not limited, and for example, a metal material different from a base material 2' described later is preferably used. Specific examples thereof include a metal material having a thermal conductivity higher than the base material 2', a material having Young's modulus higher than the base material 2' or the like.

In FIG. 1(B), the main body part 2 (the bottom part 21 and the side surface part 22) is described as having a single layer structure. However, the main body part 2 has a multilayer structure. A specific description will be given with reference to FIG. 2. FIG. 2 illustrates an enlarged sectional view of the region Y shown in FIG. 1(B). As shown in FIG. 2, the main body part 2 includes the base material 2' and a coating film layer 4.

The base material 2' is formed of a material including a metal as a main component. The metal is not particularly limited, and examples thereof include aluminum, iron, copper, stainless steel or the like, and may be an alloy in which two or more kinds of metals are combined (for example, a stainless steel or the like). Further, the base material 2' may have a multilayer structure in which a plurality of layers formed of different materials are laminated. A thickness of the base material 2' is set appropriately depending on the use of the cooking utensil 1, and is usually 1 mm or more, and may be 10 mm or more. The thickness of the base material 2' is usually 10 mm or less and may be 5 mm or less.

The coating film layer 4 is formed on the surface of the base material 2', and the surface on which the coating film layer 4 is formed corresponds to the cooking region 2a. The coating film layer 4 has a structure in which a primer layer 41, an intermediate layer 42, and a top coat layer 43 are laminated in this order from the side of the base material 2'.

The primer layer 41 is disposed on the surface of the base material 2' and is formed of a resin such as a fluorine resin, polyamideimide, polyimide, polyether sulfone, polyether ether ketone, polyphenyl sulfide or the like. The fluorine resin is not particularly limited as long as it is a resin including fluorine (F) in the molecule. Examples of such a fluorine resin include polytetrafluoroethylene (PTFE), tetrafluoroethylene-perfluoroalkyl vinyl ether copolymer (PFA), tetrafluoroethylene-hexafluoropropylene copolymer (FEP), and polyvinylidene fluoride (PVDF), ethylene chlorotrifluoroethylene (ECTFE), fluorinated polypropylene (FLPP) or the like. These resins may be used alone or in combination of two or more.

The thickness of the primer layer 41 is set appropriately depending on the use of the cooking utensil 1, and is usually 5 µm or more, and may be 10 µm or more. The thickness of the primer layer 41 is usually 30 µm or less and may be 20 µm or less.

The intermediate layer 42 is disposed on the surface of the primer layer 41 and is formed of the above-described resin such as the fluorine resin, polyamideimide, polyimide, polyether sulfone, polyether ether ketone, polyphenyl sulfide or the like. The resin forming the intermediate layer 42 may be the same as or different from the resin forming the primer layer 41. Further, similarly to the primer layer 41, the resin and a binder may be used in combination. In FIG. 2, the intermediate layer 42 has a single layer structure. However, the intermediate layer 42 may have a multilayer structure depending on the use of the cooking utensil or the like. If the intermediate layer 42 has a multilayer structure, each layer may be formed of the same resin or may be formed of different resins.

The thickness of the intermediate layer 42 is set appropriately depending on the use of the cooking utensil 1, and is usually 10 µm or more, and may be 15 µm or more. The thickness of the intermediate layer 42 is usually 30 µm or less and may be 20 µm or less. If the intermediate layer 42 has a multilayer structure, the thickness of the entire intermediate layer 42 may be in the above range.

The top coat layer 43 is disposed on the surface of the intermediate layer 42, and is formed of the above-described resin such as the fluorine resin, polyamideimide, polyimide, polyether sulfone, polyether ether ketone, polyphenyl sulfide or the like. The top coat layer 43 corresponds to the cooking region 2a (cooking surface), and is preferably formed of a fluorine resin in order to reduce sticking or scorching of food.

The thickness of the top coat layer 43 is set appropriately depending on the use of the cooking utensil 1, and is usually 10 µm or more, and may be 20 µm or more. The thickness of the top coat layer 43 is usually 50 µm or less, and may be 30 µm or less.

Each of the primer layer 41, the intermediate layer 42 and the top coat layer 43 includes ceramic particles 5. The ceramic particles 5 are not particularly limited, and examples thereof include ceramic particles formed of carbide ceramics, oxide ceramics, nitride ceramic or the like of silicon carbide, alumina, silica, silicon nitride or the like. The types of the ceramic particles 5 may be used alone or in combination of two or more. Among them, it is preferable to use ceramic particles including silicon carbide as a main component in terms of the thermal conductivity, high hardness, affinity with organic coating or the like.

The ceramic particles 5 included in the primer layer 41 have, for example, an average particle size of 1 µm or more and 20 µm or less and may have an average particle size of 3 µm or more and 15 µm or less. The ceramic particles 5 included in the intermediate layer 42 have, for example, an average particle size of 1 µm or more and 30 µm or less, may have an average particle size of 5 µm or more and 20 µm or less, and preferably have an average particle size of 7 µm or more and 15 µm or less. The ceramic particles 5 included in the top coat layer 43 have, for example, an average particle size of 15 µm or more and 26 µm or less, may have an average particle size of 15 µm or more and 24 µm or less, and preferably have an average particle size of 15 µm or more and 20 µm or less. The most preferable combination of the average particle size of the ceramic particles 5 in each layer is 3 µm or more and 15 µm or less for the ceramic particles 5 included in the primer layer 41, 7 µm or more and 15 µm or less for the ceramic particles 5 included in the intermediate layer 42, and 15 µm or more and 20 µm or less for the ceramic particles 5 included in the top coat layer 43. The average particle size of the ceramic particles 5 may be measured by using, for example, a laser diffraction scattering method, a sedimentation method or the like.

The ceramic particles 5 included in each of the primer layer 41, the intermediate layer 42, and the top coat layer 43 may use the ceramic particles 5 having the same average particle size or may use the ceramic particles 5 having different average particle sizes.

The shape of the ceramic particles 5 is not particularly limited. The ceramic particles 5 may, for example, be spherical or granular, columnar, as polished or molded, but also have an indefinite shape, such as fragments obtained by simply grinding the ceramic. The ceramic particles 5 may be porous. If the porous ceramic particles 5 are used, the resin forming the coating film layer 4 can be infiltrated into the pores of the ceramic particles 5, and therefore the adhesion between the ceramic particles 5 and the layers constituting the coating film layer 4 can be improved. The type of the ceramic particles 5, such as particle size and shape, affects an uneven shape or surface roughness of the surface of the coating film layer 4. The type of the ceramic particles 5 such as the particle size and the shape may be selected appropriately depending on the desired state of the coating film layer 4.

The content of the ceramic particles 5 in each layer constituting the coating film layer 4 is not particularly limited. The ceramic particles 5 are included at a ratio of, for example, 3 parts by mass or more, may be included at a ratio of 5 parts by mass or more, and are preferably included at a ratio of 10 parts by mass or more with respect to 100 parts by mass of the resin used in each layer. As the upper limit of the content of the ceramic particles 5 in each layer, for example, the ceramic particles 5 are included at a ratio of 200 parts by mass or less, may be included at a ratio of 180 parts by mass or less, and are preferably included at a ratio of 150 parts by mass or less. The content of the ceramic particles 5 may be the same or different ratio in each layer.

The coating film layer 4 has a thermal conductivity exceeding 85 W/m·K. By having such thermal conductivity, the coating film layer 4 can quickly transfer heat from the heated region 2b to the cooking region 2a. Therefore, the food existing in the cooking region 2a can be heated in a short time. The coating film layer 4 may have a thermal conductivity of 95 W/m·K or more in terms of being able to heat the food in a shorter time.

The method for forming the coating film layer 4 on the surface of the base material 2' is not particularly limited, and the coating film layer 4 is formed by a method usually adopted by those skilled in the art. For example, a method that the resin forming each layer is dissolved or dispersed in a solvent, applied to the cooking region 2a, and dried is mentioned. The method for coating is not limited, and examples thereof include a spray method, a brush coating method, a dipping method, or the like. The method for drying may be either natural drying or heat drying. The time for drying is not particularly limited, and in the case of heat drying, it is, for example, approximately 5 to 30 minutes at a temperature of about 70 to 150°C.

The coating film layer 4 is formed by, for example, the following procedure. First, a coating including the resin and the ceramic particles 5 forming the primer layer 41 is applied to the surface of the base material 2'. After applying, it is dried to form the primer layer 41. Next, a coating including the resin and the ceramic particles 5 forming the intermediate layer 42 is applied to the surface of the primer layer 41. After applying, it is dried to form the intermediate layer 42. Finally, a coating including the resin and the ceramic particles 5 forming the top coat layer 43 is applied to the surface of the intermediate layer 42. After applying, it is dried to form the top coat layer 43. In this way, the coating film layer 4 is formed on the surface of the base material 2'.

Each coating for forming the primer layer 41, the intermediate layer 42, and the top coat layer 43 may include a solvent, a binder or the like, as needed. The solvent is not particularly limited, and examples thereof include water, alcohols, ethylene glycol, N-methylpyrrolidone, glycol ethers, hydrocarbon solvents or the like. By using a solvent, a viscosity of the coating can be adjusted, and it becomes easier to apply.

The binder is not particularly limited, and examples thereof include polyamideimide, polyphenyl sulfide, polyether sulfone, polyimide, polyether ether ketone or the like. By using the binder, the ceramic particles 5 described later can be easily fixed to each layer.

Conventional cooking utensils coated with a coating film including a resin such as a fluorine resin or the like tend to have a thermal conductivity lower than cooking utensils which are not coated with a coating film. This is because the resin such as a fluorine resin or the like has a thermal conductivity lower than metals used as a base material for cooking utensils (for example, aluminum, iron, copper, stainless steel or the like). On the contrary, the cooking utensil 1 of the present disclosure includes the coating film layer 4 having a thermal conductivity exceeding 85 W/m·K, and the ceramic particles 5 are included in each of the primer layer 41, the intermediate layer 42, and the top coat layer 43. Therefore, the cooking utensil 1 of the present disclosure can quickly transfer heat from the heated region 2b to the cooking region 2a and can heat the food existing in the cooking region 2a in a short time.

The cooking utensil 1 related to the above-described embodiment is described using a frying pan as an example. However, the cooking utensil 1 of the present disclosure is not particularly limited to flying pans as long as it is, for example, a cooking utensil using a metal material as the base material 2' and used for heating and cooking various foods. Examples of such cooking utensils include hot plates, takoyaki cooking plates, plates for heated steam cooker, plates for ovens, pots, grill pots, woks, kettles or the like, and are not particularly limited.

### Description of the Reference Numeral

- 1: cooking utensil (flying pan)
- 2: main body part
- 21: bottom part
- 22: side surface part
- 2a: cooking region
- 2b: heated region
- 2': base material
- 3: handle part
- 4: coating film layer
- 41: primer layer
- 42: intermediate layer
- 43: top coat layer
- 5: ceramic particle

## Claims

1. A cooking utensil comprising:
a base material including a cooking region on one main surface side, and a coating film layer applied to one main surface side of the base material,
wherein the coating film layer has a thermal conductivity exceeding 85 W/m·K, and includes a primer layer disposed on the base material side, a top coat layer disposed on the outermost surface, and at least one intermediate layer disposed between the primer layer and the top coat layer, and
wherein each of the primer layer, the intermediate layer and the top coat layer includes ceramic particles.

2. The cooking utensil according to claim 1, wherein the top coat layer includes a fluorine resin.

3. The cooking utensil according to claim 1 or 2, wherein the ceramic particles include silicon carbide as a main component.

4. The cooking utensil according to any of claims 1 to 3, wherein the ceramic particles have an average particle size of 1 µm or more and 35 µm or less.

5. The cooking utensil according to any of claims 1 to 4, wherein the cooking utensil is a flying pan, a plate for heated steam cooker or a plate for oven.
